# EUROPEAN PATENT APPLICATION

(11) **EP 4 704 469 A1**
(43) Date of publication of application: **04.03.2026**
(21) Application number: 24795571.9
(22) Date of filing: 26.02.2024
(51) Int. Cl.: H04W 48/16, H04W 56/00, H04L 27/26

(54) **DETECTION METHOD AND APPARATUS FOR PRIMARY SYNCHRONIZATION SIGNAL (PSS) SEQUENCE**

(30) Priority: 27.04.2023 CN 202310480842
(71) Applicant: SANECHIPS TECHNOLOGY CO., LTD., Shenzhen, Guangdong 518055 (CN)
(72) Inventor: REN, Biao, Shenzhen, Guangdong 518055 (CN)
(74) Representative: Chimini, Francesco
(86) International application number: PCT/CN2024/078597
(87) International publication number: WO 2024/222183

(57) **Abstract**

Embodiments of the present invention provide a method and an apparatus for detecting a Primary Synchronization Signal, PSS, sequence. **The** detection method comprises: configuring a search parameter based on a search scenario of the Primary Synchronization Signal, PSS, sequence; performing PSS correlation calculation on resources invoked based on the search parameter; and performing period accumulation based on correlation values from the PSS correlation calculation, then performing peak search, and selecting a corresponding PSS sequence based on a peak value, so as to complete detection of the PSS sequence.

## Description

### Cross-Reference to Related Application

The present invention is based on Chinese Patent Application No. CN 202310480842.0 filed on April 27, 2023 and entitled "Detection Method and Apparatus for Primary Synchronization Signal (PSS) Sequence", and claims priority to the patent application, the disclosure of which is incorporated herein by reference in its entirety.

### Technical Field

Embodiments of the present invention relate to the field of communications, and in particular, to a method and an apparatus for detecting a Primary Synchronization Signal (PSS) sequence.

### Background

Primary Synchronization Signal, PSS, detection is to perform search in a designated time period on a certain frequency point. For initial cell search, the period of a Synchronization Signal Block, SSB, is unknown, and this period is assumed to be 20 ms by a User Equipment (UE). As long as the PSS is detected, the UE can obtain PSS timing, a subcarrier spacing, and a Network Identifier, NID, of a Physical Cell Identifier (PCI). Moreover, the PSS may also be used to eliminate frequency fluctuation between the UE and the network, and may subsequently perform Secondary Synchronization Signal, SSS, detection, so as to acquire the PCI.

The PSS detection needs to support concurrent blind detection processing of two carriers at two frequency points. There are two scenarios: cell initial search and cell camping, data of only one carrier is detected during the cell initial search, and two frequency points of two carriers may be detected in parallel after the cell camping. In current conventional practice, a PSS detection apparatus of each carrier is fixed, and the resource invoked by each carrier has poor configurability and reusability. The PSS is a first signal for the UE to perform cell search, and is also the most complex process in cell search. In this phase, the UE does not know system timing, and also has a large fluctuation in frequency with a network. In the current conventional practice, a sliding correlation method of preset frequency offset is adopted, such that the calculation amount and the storage amount increase proportionally with the preset frequency offset, leading to excessive overhead.

In conclusion, in the related art, there are problems of poor configurability and reusability and low calculation efficiency of detection of a PSS sequence.

### Summary

Embodiments of the present invention provide a method and an apparatus for detecting a Primary Synchronization Signal, PSS sequence, so as to at least solve the problems of poor configurability and reusability and low calculation efficiency of detection of a PSS sequence in the related art.

According to some embodiments of the present invention, provided is a method for detecting a Primary Synchronization Signal, PSS sequence, including: a search parameter is configured based on a search scenario of the Primary Synchronization Signal, PSS, sequence; PSS correlation calculation is performed on resources invoked based on the search parameter; and peak search is performed based on correlation values from the PSS correlation calculation, and a corresponding PSS sequence is selected based on a peak value, so as to complete detection of the PSS sequence.

According to some other embodiments of the present invention, an apparatus for detecting a Primary Synchronization Signal, PSS, sequence is provided, including: a parameter configuration module, configured to configure a search parameter based on a search scenario of the Primary Synchronization Signal, PSS, sequence; a first detection branch, including a correlation calculation unit and a peak search unit, wherein the correlation calculation unit is configured to perform PSS correlation calculation on resources invoked based on the search parameter; and the peak search unit is configured to perform peak search based on correlation values from the PSS correlation calculation; and a selection module, configured to select a corresponding PSS sequence based on a peak search result, so as to complete detection of the PSS sequence.

### Brief Description of the Drawings

Fig. 1 is a schematic diagram of an SSB transmission format in the related art;
Fig. 2 is a flowchart of a method for detecting a Primary Synchronization Signal, PSS, sequence according to embodiments of the present invention;
Fig. 3 is a structural block diagram of an apparatus for detecting a Primary Synchronization Signal, PSS, sequence according to embodiments of the present invention;
Fig. 4 is a structural block diagram of an apparatus for detecting a Primary Synchronization Signal, PSS, sequence according to embodiments of the present invention;
Fig. 5 is a structural block diagram of an apparatus for detecting a Primary Synchronization Signal, PSS, sequence according to embodiments of the present invention;
Fig. 6 is a hardware block diagram of an apparatus for detecting a PSS sequence according to embodiments of the present invention;
Fig. 7 is a flowchart of a method for detecting a PSS sequence according to embodiments of the present invention;
Fig. 8 is a principle block diagram of a PSS correlation calculation unit according to embodiments of the present invention;
Fig. 9 is a schematic principle diagram of segmented correlation calculation according to embodiments of the present invention;
Fig. 10 is a schematic principle diagram of a time-domain data buffer according to embodiments of the present invention;
Fig. 11 is a schematic principle diagram of a time-domain data buffer according to embodiments of the present invention;
Fig. 12 is a schematic principle diagram of external storage according to embodiments of the present invention;
Fig. 13 is a schematic principle diagram of initial data writing of external storage according to embodiments of the present invention;
Fig. 14 is a schematic principle diagram of non-initial data writing of external storage according to embodiments of the present invention; and
Fig. 15 is a principle flowchart of a method for detecting a PSS sequence according to embodiments of the present invention.

### Detailed Description of the Embodiments

Hereinafter, embodiments of the present invention are described in detail with reference to the accompanying drawings and in conjunction with the embodiments.

It should be noted that the terms "first", "second", etc. in the description, claims and drawings of embodiments of the present invention are used to distinguish similar objects, and are not necessarily used to describe a specific sequence or a precedence order.

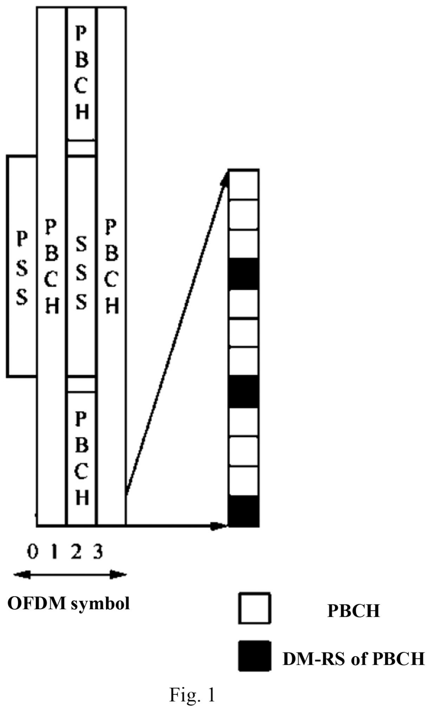

In a communication system, a Synchronization Signal Block, SSB, carries a Primary Synchronization Signal, PSS, a Secondary Synchronization Signal, SSS, and a Physical Broadcast Channel, PBCH, such that a UE realizes downlink synchronization. Fig. 1 is a schematic diagram of an SSB transmission format in the related art; As shown in Fig. 1, a vertical axis represents a frequency domain, and a horizontal axis represents a time domain; and when SSB transmission is performed, each SSB is composed of 240 continuous subcarriers in the frequency domain which are numbered by 0-239, and is composed of four continuous OFDM (Orthogonal Frequency Division Multiplex) symbols in the time domain which are numbered by 0-3, in which a PSS is mapped to 127 continuous subcarriers in the middle of an SSB symbol 0. In NR, the period of an SSB block is variable and can be configured as 5 ms, 10 ms, 20 ms, 40 ms, 80 ms, 160 ms, and within each period, a plurality of SSBs are confined within a half-frame of certain 5 ms. The PSS is mapped to 127 continuous subcarriers in the SSB, and based on different SSB subcarrier spacings, there are a total of five situations regarding the SSB block.

In a current conventional PSS detection practice, when faced with an initial cell search scenario, a relatively large carrier frequency offset may exist between a UE and a base station, which may cause degradation of the performance of peak detection of PSS sliding correlation, and at this time, a PSS detection module needs to be able to resist the effect of a large frequency offset; and usually, a sliding correlation method of preset frequency offset is adopted, such that the calculation amount and the storage amount increase proportionally with the preset frequency offset, leading to excessive overhead. For the problems of poor configurability and reusability of resources in PSS blind detection, the large calculation amount and storage amount in the sliding correlation of preset frequency offset, and the reduction of decoding processing performance caused by long detection time in the related art, no solution has been proposed.

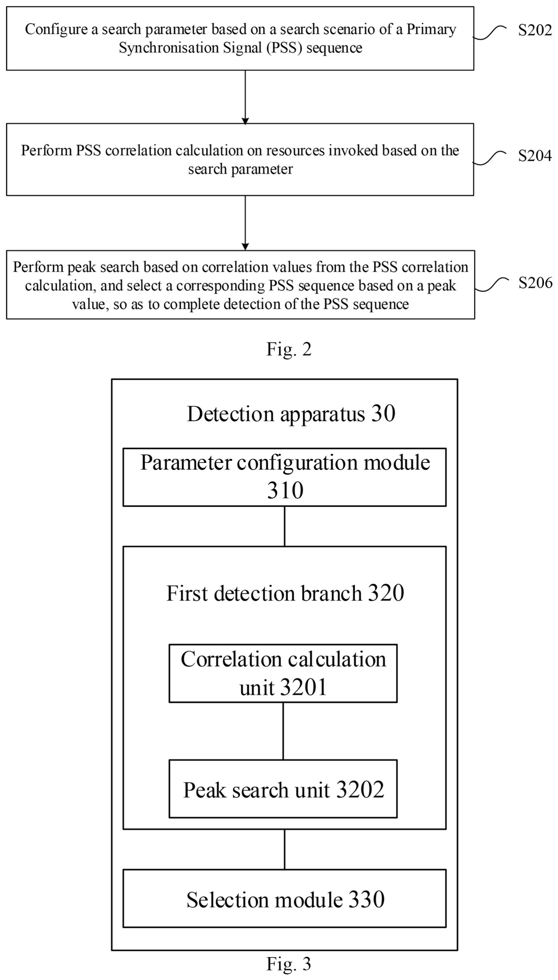

The present embodiment discloses a method for detecting a Primary Synchronization Signal, PSS, sequence. Fig. 2 is a flowchart of a method for detecting a Primary Synchronization Signal, PSS, sequence according to embodiments of the present invention. As shown in Fig. 2, the flow includes the following steps:
step S202: a search parameter is configured based on a search scenario of the Primary Synchronization Signal, PSS, sequence.

In some exemplary embodiments, the search scenario includes one of the following: frequency sweeping, cell search or cell camping. In a practical implementation process, system software identifies a search scenario based on an actual situation, and configures a search parameter based on a specific search scenario.

In some exemplary embodiments, the search parameter includes at least one of the following: carrier type, SubCarrier Spacing, SCS, sampling rate, Synchronization Signal Block, SSB, period, correlation length, Cell Identifier (ID), number of antennas, noise elimination and normalization, or multi-period accumulation.

Step S204: PSS correlation calculation is performed on resources invoked based on the search parameter.

In some exemplary embodiments, PSS correlation calculation is performed on storage resources and calculation resources invoked based on the search parameter. The PSS correlation calculation may include segmented correlation calculation or non-segmented correlation calculation.

In some exemplary embodiments, after PSS correlation calculation is performed on resources invoked based on the search parameter, the method further includes: an antenna reception signal power is compared with a preset normalization threshold, and if the antenna reception signal power is greater than or equal to the preset normalization threshold, noise elimination and normalization processing is performed on an antenna reception signal.

In some exemplary embodiments, after PSS correlation calculation is performed on resources invoked based on the search parameter, the method further includes: if the search parameter includes multi-period accumulation, a PSS correlation value at the current position and historical PSS correlation values at the current position are accumulated.

Step S206: peak search is performed based on correlation values from the PSS correlation calculation, and a corresponding PSS sequence is selected based on a peak value, so as to complete detection of the PSS sequence.

In some exemplary embodiments, based on the correlation values from the PSS correlation calculation, a corresponding PSS sequence is selected, includes: a noise threshold is calculated based on noise statistical data; and the corresponding PSS sequence is selected by comparison based on the noise threshold and the peak value of correlation values.

By means of the described steps, a search parameter is configured based on a search scenario of the Primary Synchronization Signal, PSS, sequence; PSS correlation calculation is performed on resources invoked based on the search parameter; and peak search is performed based on correlation values from the PSS correlation calculation, and a corresponding PSS sequence is selected based on a peak value, so as to complete detection of the PSS sequence. The present invention solves the problems of poor configurability and reusability, large calculation amount and storage amount, and the reduction of detection processing performance caused by long detection time in the detection of PSS sequences in the related art, thereby achieving the effects of improving the configurability and reusability of detection of PSS sequences, and greatly reducing the calculation and storage overheads while ensuring the detection performance, which can allow for rapid completion of the PSS detection.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. On the basis of such understanding, the portion of the technical solution of the present invention that contributes in essence or to the related art may be embodied in the form of a software product stored in a storage medium (such as an ROM/RAM, a magnetic disk and an optical disc); and the storage medium includes several instructions to cause a terminal device (which may be a mobile phone, a computer, a server or a network device, etc.) to perform the method according to the embodiments of the present invention.

The present embodiment further provides an apparatus for detecting a Primary Synchronization Signal, PSS, sequence. The apparatus is configured to implement the embodiments and preferred embodiments, and what has been described will not be repeated again. As used below, the term "module" may implement a combination of software and/or hardware of predetermined functions. Although the apparatus described in the following embodiments is preferably implemented in software, implementation in hardware or a combination of software and hardware is also possible and could have been conceived.

Fig. 3 is a structural block diagram of an apparatus for detecting a Primary Synchronization Signal, PSS, sequence according to embodiments of the present invention. As shown in Fig. 3, the detection apparatus 30 includes: a parameter configuration module 310, configured to configure a search parameter based on a search scenario of the Primary Synchronization Signal, PSS, sequence; a first detection branch 320, including a correlation calculation unit 3201 and a peak search unit 3202, wherein the correlation calculation unit 3201 is configured to perform PSS correlation calculation on resources invoked based on the search parameter; and the peak search unit 3202 is configured to perform peak search based on correlation values from the PSS correlation calculation; and a selection module 330, configured to select a corresponding PSS sequence based on a peak search result, so as to complete detection of the PSS sequence.

In some embodiments, the parameter configuration module 310 and the selection module 330 may be software modules, and the first detection branch 320 may be a hardware module.

In some exemplary embodiments, there are a plurality of correlation calculation units 3201, and each correlation calculation unit 3201 corresponds to PSS correlation calculation of data received by one antenna.

In some exemplary embodiments, the correlation calculation unit 3201 further includes: a first buffer, a second buffer, and a correlation value buffer area in a level-2 buffer L2D, wherein the first buffer and the second buffer are configured to store input values of PSS correlation calculation written in a ping-pong manner, and the correlation value buffer area is configured to store historical correlation values outputted by the correlation calculation unit 3201.

In some exemplary embodiments, the correlation calculation unit 3201 further includes: a first random access memory, a second random access memory, a first read-only memory and a second read-only memory, wherein the first random access memory and the second random access memory are used for buffering time-domain data in a ping-pong manner, and the first read-only memory and the second read-only memory are used for buffering two odd and even local PSS sequences, respectively.

In a practical implementation process, the correlation calculation unit 3201 includes: a segmented correlation accumulation branch and a non-segmented correlation accumulation branch, wherein 128-point accumulation calculation of the non-segmented correlation accumulation branch and last 64-point accumulation calculation of the segmented correlation accumulation branch share a set of calculation resources, and enabling of the segmented correlation accumulation branch and the non-segmented correlation accumulation branch is controlled by means of a configuration signal. In a practical implementation process, a period accumulation unit is provided to improve the peak search performance.

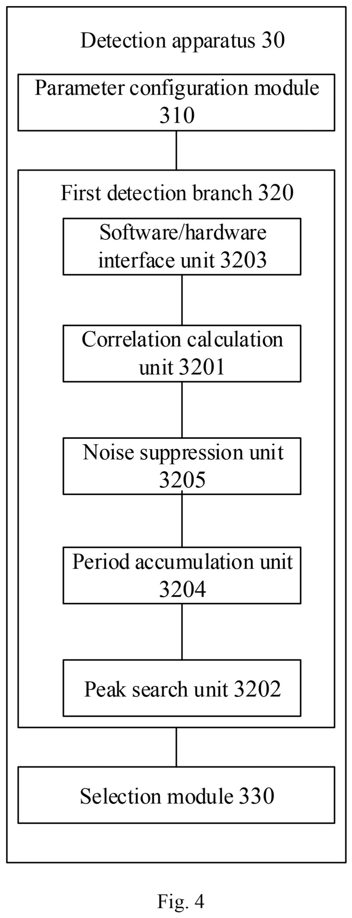

In some exemplary embodiments, Fig. 4 is a structural block diagram of an apparatus for detecting a Primary Synchronization Signal, PSS, sequence according to embodiments of the present invention. As shown in Fig. 4, the first detection branch 320 further includes: a software/hardware interface unit 3203, configured to send the configured search parameter to the first detection branch 320, and report the peak search result to the selection module 330. In some exemplary embodiments, the first detection branch 320 further includes: a period accumulation unit 3204, configured to accumulate, if the search parameter includes multi-period accumulation, a PSS correlation value at the current position and historical PSS correlation values at the current position. In some exemplary embodiments, the first detection branch 320 further includes: a noise suppression unit 3205, configured to compare an antenna reception signal power with a preset normalization threshold, and perform noise elimination and normalization processing on an antenna reception signal if the antenna reception signal power is greater than or equal to the preset normalization threshold.

In an implementation process, the software/hardware interface unit 3203 is included in the first detection branch 320 in this embodiment, but in a practical implementation process, the software/hardware interface unit 3203 may also be independent of the first detection branch 320 and used as a separate hardware module. Moreover, the software/hardware interface unit 3203 has data exchange relationships with other constituent units of the first detection branch 320, and not merely with the correlation calculation unit 3201. The form and connection relationship of the software/hardware interface unit 3203 as shown in Fig. 4 are only illustrative, and no specific limitation is made to the form and connection relationship of the software/hardware interface unit 3203.

In some exemplary embodiments, the software/hardware interface unit 3203 uses two-level storage to store search parameters for PSS sequence detection of the current period and a next period respectively, so as to support advance issuing of the search parameters.

In some exemplary embodiments, the first detection branch further includes one or more registers for storing the search parameter, wherein the search parameter includes at least one of the following: carrier type, SubCarrier Spacing (SCS), sampling rate, Synchronisation Signal Block, SSB, period, correlation length, Cell Identifier (ID), number of antennas, noise elimination and normalization, or multi-period accumulation.

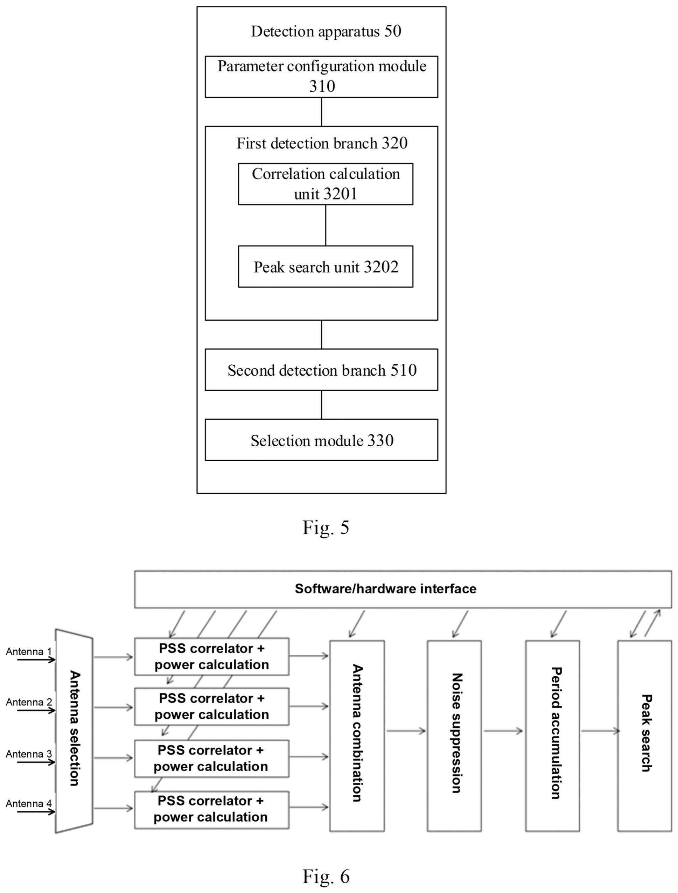

In some exemplary embodiments, Fig. 5 is a structural block diagram of an apparatus for detecting a Primary Synchronization Signal, PSS, sequence according to embodiments of the present invention. As shown in Fig. 5, in addition to the modules in Fig. 3, the detection apparatus 50 further includes: a second detection branch 510, wherein the structure of the second detection branch 510 is the same as that of the first detection branch 320, and the second detection branch 510 and the first detection branch 320 constitute a PSS sequence detection branch with two carriers in parallel.

In a practical implementation process, the second detection branch 510 and the first detection branch 320 may be adopted at the same time, and the two have the same structure and can meet the requirement of parallel detection of the two carriers.

In some exemplary embodiments, the detection apparatus can further include: an external memory and an external memory read/write control circuit. In some exemplary embodiments, the detection apparatus can further include: a sampling rate counter, configured to adapt to different SubCarrier Spacings, SCSs, and sampling rate data.

It should be noted that the modules above can be implemented by software or hardware; for the latter, it may be implemented in the following manner but is not limited thereto: the described modules, especially software modules, may all be located in the same processor; or all the modules above are located in different processors in any arbitrary combination manner.

It is apparent that a person skilled in the art shall understand that all of the modules or steps in embodiments of the present invention may be implemented by using a general computing apparatus, may be centralized on a single computing apparatus or may be distributed on a network composed of multiple computing apparatuses. The modules or steps may be implemented by using executable program codes of the computing apparatus, and thus, the program codes may be stored in a storage apparatus and executed by the computing apparatus, and in some cases, the shown or described steps may be executed in a sequence different from that shown herein, or the modules or steps are manufactured into integrated circuit modules, or multiple modules or steps therein are manufactured into a single integrated circuit module for implementation. Thus, embodiments of the present invention are not limited to any specific hardware and software combinations.

To make a person skilled in the art better understand the technical solutions of embodiments of the present invention, hereinafter, illustration is made in combination with scenario embodiments.

### Scenario Embodiment I

In embodiments of the present invention, efficient PSS sequence detection design is mainly embodied in that software configures different parameters (including different carriers, SubCarrier Spacings, SCSs, sampling rates, SSB periods, correlation length, cell ID, number of antennas, normalized noise elimination and multi-period accumulation, etc.) based on different scenarios such as frequency sweeping, cell search and cell camping, and hardware invokes different resources based on different parameters for calculation, so as to minimize the resource and power consumption. For example, the multi-period accumulation function can be enabled under low signal-to-noise ratio cell search to improve the PSS peak search quality, and the period accumulation module is not applicable under high signal-to-noise ratio cell search, to release resources and reduce power consumption, etc.; and during cell search, if there is large frequency offset, software may enable the PSS segmented correlation option to resist the effect of the frequency offset. In order to overcome the problems of inflexible configuration and reuse of resources for PSS detection and low detection efficiency in complex scenarios, embodiments of the present invention provide an efficient method and apparatus for detecting a PSS sequence, which are applicable to scenarios requiring PSS search, such as Public Land Mobile Network, PLMN, frequency sweeping, In-Channel Selectivity, ICS, cell search, and intra-frequency and inter-frequency search in idle and connected states. In order to facilitate hardware implementation, a scenario-agnostic design method is adopted, thereby enhancing the universality of the detection method. A PSS detection branch with two carriers in parallel is adopted, in which data input can be independently selected by software configuration, and parallel PSS detection of two carriers can be simultaneously performed based on the configuration; and certainly, the PSS detection of only a single carrier can also be performed based on the configuration. Each branch is provided with a correlation length indication register and an SSB period continuity indication register, such that hardware can operate under software scheduling, thereby achieving maximum hardware compatibility and reuse; and the hardware can flexibly configure implementation of relevant modules, thereby saving resources, reducing power consumption and increasing the detection efficiency.

Fig. 6 is a hardware block diagram of an apparatus for detecting a PSS sequence according to embodiments of the present invention. As shown in Fig. 6, a PSS correlation calculation unit enables corresponding modules based on different antenna serial numbers, so as to save resources and reduce power consumption. A built-in sampling rate counter of the module can be adapted to different subcarrier spacings, SCSs, and sampling rate data, and the PSS correlation calculation supports calculation of any correlation length and supports segmented correlation to occupy the same storage and calculation resources; and flexible calculation may be performed based on software configuration, and continuous calculation and discontinuous calculation are supported. The noise suppression unit can eliminate noise caused by rapid AGC changes, and software can enable or delete the module. The period accumulation unit mainly performs data accumulation of multiple periods on the PSS correlation data to improve the peak search performance, and this module operates when multi-period accumulation is enabled. In addition, in order to save hardware storage resources, data is stored in an external memory and a dedicated external memory read/write control circuit is provided for exchange. The peak search unit is mainly used for searching PSS correlation data, sorting the found data and then reporting same to the software, and the software can flexibly configure parameters related to peak search based on situations. The main function of the software/hardware interface unit is to receive parameters issued by the software and support advance issuing of the parameters, that is, parameters of a next period can be issued during operation in the current period. For hardware design, two-level storage is used to ensure that the parameters can be stored; in addition, a search peak value and noise statistical data are provided to the software via the interface, such that the software calculates a noise threshold.

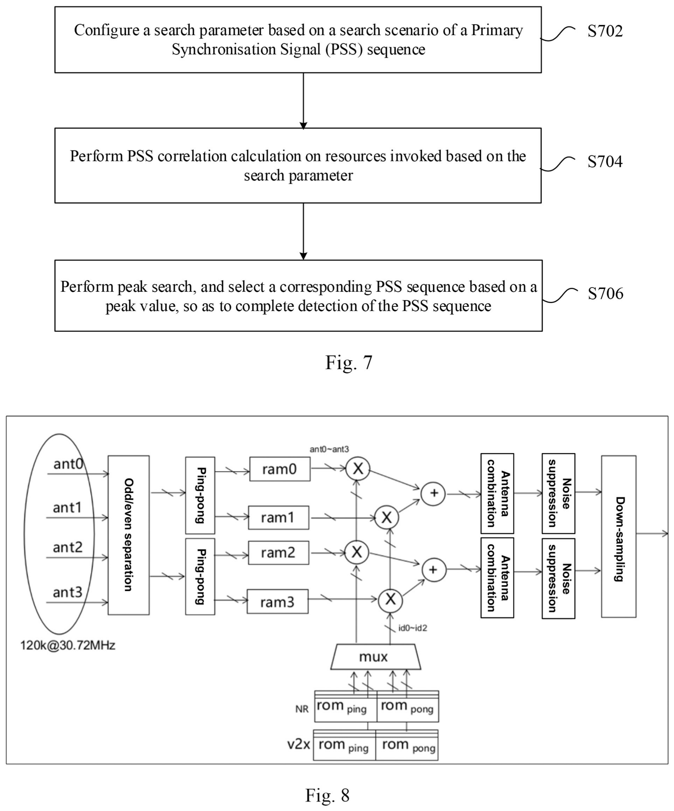

According to the hardware structure of the detection apparatus, embodiments of the present invention provide a method for detecting a PSS sequence. Fig. 7 is a flowchart of a method for detecting a PSS sequence according to embodiments of the present invention. As shown in Fig. 7, the flow is as follows:
step S702: a search parameter is configured based on a search scenario of the PSS sequence.

In some embodiments, software performs configurations of different parameters based on different scenarios such as PLMN frequency sweeping, ICS cell search, intra-frequency and inter-frequency search in idle and connected states, including different carriers, SCSs, sampling rates, SSB periods, correlation length, cell ID, number of antennas, noise elimination and normalization and multi-period accumulation, etc.

Step S704: PSS correlation calculation is performed on resources invoked based on the search parameter.

In some embodiments, after the parameter configuration is completed, the hardware starts operation, and performs PSS correlation calculation on resources invoked based on the configuration of different parameter sets.

Step S706: peak search is performed, and a corresponding PSS sequence is selected based on a peak value, so as to complete detection of the PSS sequence.

In some embodiments, peak search is reported to the software, and noise statistical data is reported to the software for noise threshold calculation, etc. The software selects a corresponding PSS sequence based on the peak value calculation.

Fig. 8 is a principle block diagram of a PSS correlation calculation unit according to embodiments of the present invention. As shown in Fig. 8, in embodiments of the present invention, the design can support Milli Meter Wave, MMW, with a SCS of 120 k and a sampling rate of 30.72 MHz, and can support up to four antennas (ant0 - ant3 in the figure) for parallel calculation. For design of different SCSs (e.g., 15 k, 30 k, and 120 k), it is only necessary to configure a sampling point counter, and the calculation unit can be reused. To support 120 k @ 30.72 MHz, real-time and efficient calculation is achieved through odd-even separation and ping-pong operations. The PSS correlation calculation is performed using time-domain matched filtering, wherein data is buffered into RAMs (i.e., the first random access memory and the second random access memory in the embodiments above) and multiplied with a local PSS sequence. Then PSS sliding correlation operation is performed by controlling the RAM address. The local PSS sequence is stored into an ROM, and PSS sequences corresponding to three IDs are respectively stored into the ROMs (i.e. the first read-only memory and the second read-only memory in the embodiments above). In addition, switching to a V2X PSS sequence is achieved by a selector (e.g. the mux selector shown in Fig. 8), thereby supporting two operation modes of NR and V2X in terms of hardware. After correlation calculation on odd and even PSS paths, antenna combination and noise elimination are performed, and then data is downsampled to a peak search module. If multi-period accumulation is configured in software, data exchange with the external memory can be performed via the dedicated external memory read-write control circuit, so as to avoid increasing the usage of internal hardware memory resources.

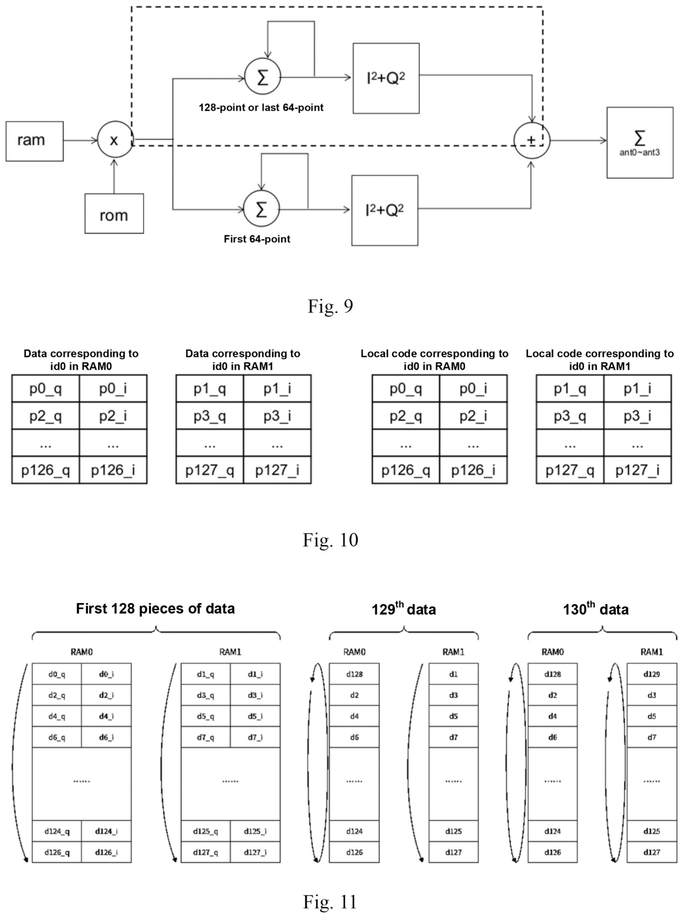

Fig. 9 is a schematic principle diagram of segmented correlation calculation according to embodiments of the present invention. As shown in Fig. 9, in the embodiments of the present invention, segmented correlation technology is used to replace the preset frequency offset technology. In an initial cell search scenario, a relatively large carrier frequency offset may exist between a UE and a base station, which may cause degradation of the performance of peak detection of PSS sliding correlation, and at this time, a PSS detection module needs to be able to resist the effect of a large frequency offset. In common practice, a preset frequency offset algorithm is used to resist the effect pf large frequency offset, and a frequency offset hypothesis set is preset. Different hypothesis frequency offsets are respectively loaded on three local time-domain PSS sequences, and each of the local time-domain PSS sequences loaded with the hypothesis frequency offset is used to perform sliding correlation calculation with a time-domain received signal. There are a total of 3Nbin combinations of the three local sequences and Nbin hypothesis frequency offsets, corresponding to 3Nbin independent processing branches. If five preset frequency offsets are added, the corresponding calculation amount and storage amount are increased by 5 times of the original. The embodiments of the present invention adopt a segmented correlation scheme, where the time-domain PSS is divided into multiple segments and correlated with the received signal. The segmentation in time domain reduces the accumulation length of direct correlation, thereby enhancing the resistance to frequency offset. Moreover, the segmented correlation and non-segmented correlation are designed in a coupled manner to share one set of hardware resources; and a corresponding module is enabled based on a configuration signal. 128-point accumulation of non-segmented correlation and last 64-point accumulation of segmented correlation share a set of resources. In the segmented correlation mode, two branches are activated to perform first and last 64-point accumulation calculation; in the non-segmented mode, only the last 64-point is activated for 128-point accumulation and calculation, and finally, power calculation of correlation result data is performed (i.e. I²+Q²). Compared with the preset frequency offset which increases the storage and calculation resources in multiple, the embodiments of the present invention have a small loss of PSS detection performance, thereby saving storage and calculation resources. In some embodiments, in the correlation calculation, sliding correlation in time domain is performed on received signals from one pair of antennas and three local sequences corresponding to local ID2. The sliding correlation calculation is achieved using time-domain matched filtering, each ID2 using an independent filtering path. Whether each branch is enabled is configured by software.

Fig. 10 is a schematic principle diagram of a time-domain data buffer according to embodiments of the present invention; and Fig. 11 is a schematic principle diagram of a time-domain data buffer according to embodiments of the present invention. As shown in Fig. 10, a design corresponding to one branch in odd and even paths and one local code is introduced, and other branches use similar design. First, a PSS-matched correlator uses the RAM to buffer time-domain data, and when the sampling rate is 30.72 M, the consumed resources are the most; and at other sampling rates, resources used at the highest sampling rate are reused. The local code is divided into odd and even codes, and stored in ROM0 and ROM1. As shown in Fig. 11, online data is stored in two RAMs respectively, and after arrival, the first 128 pieces of data are stored in RAM0 and RAM1 in a ping-pong manner. For example, first data is stored in RAM0, second data is stored in RAM1, and so on until both RAMs are full. After 129th data arrives, the data is stored into address 0 of RAM0; after 130th data arrives, the data is stored into address 0 of RAM1; and after 131st data arrives, the data is stored into address 1 of RAM0, and so on, in a circular buffer manner.

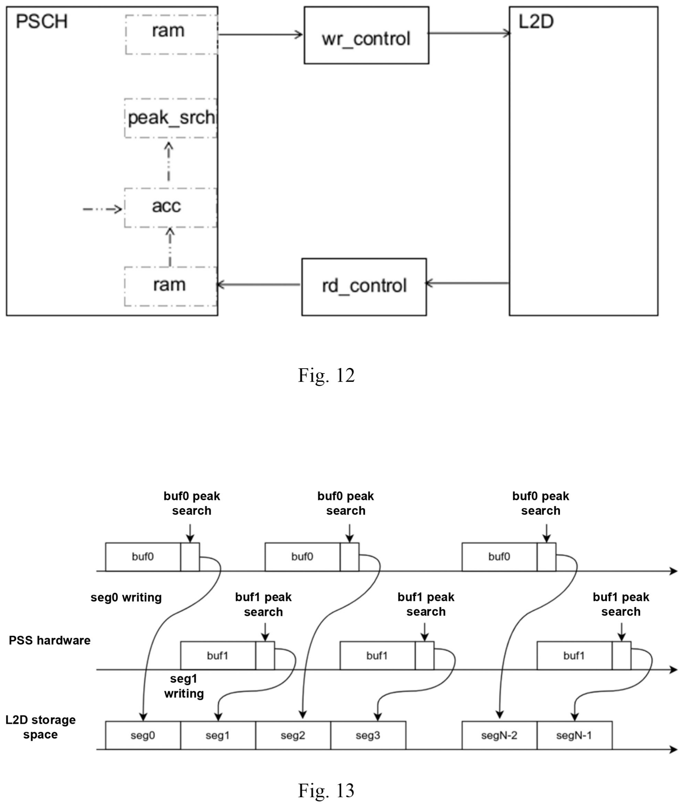

Fig. 12 is a schematic principle diagram of external storage according to embodiments of the present invention. As shown in Fig. 12, in the embodiments of the present invention, the PSS correlation calculation is completed in hardware, but there is no long-term storage space in the hardware, and PSS correlation values are exported to an external storage L2D for buffering. In the present solution, two temporary buffers (i.e. the first buffer and the second buffer in the embodiments above) are provided in the hardware, and the PSS correlation result is written into the buffers in a ping-pong manner. Each time a buffer is fully written, the hardware is responsible for writing the PSS correlation result of the buffer into the L2D temporary buffer. In addition to writing the PSS correlation values into the L2D, the hardware counts non-zero noise greater than a noise threshold based on the noise threshold configured by the software, and reports same to the software to calculate a correlation peak threshold. After the temporary buffer receives the current PSS correlation peak value, the software performs scheduling at an appropriate time, and accumulates same with PSS historical data in the L2D. The accumulation result is stored back in a main storage space of the L2D, and the peak search of this segment is performed. To match sufficient small hardware storage buffer and avoid too frequent software operations, the temporary buffer in L2D can be set to N times the size of the hardware buffer. In the hardware-based peak search scheme, the hardware needs to read back the segmented historical PSS correlation peaks from L2D into the hardware buffer, and accumulate same with the current PSS correlation peaks from the PSS correlator. Once completion of peak search of current accumulated values, the hardware writes the accumulated values back into the L2D for storage.

Fig. 13 is a schematic principle diagram of initial data writing of external storage according to embodiments of the present invention. As shown in Fig. 13, the whole search space is divided into N segments (seg0, seg1 and segN-1 respectively), and then peak search is performed sequentially. First, initial PSS correlation peak search and writing thereof into the L2D are considered. The PSS correlation is implemented in the hardware, two temporary buffers (i.e. buf0 and buf1 in Fig. 13), i.e. the first buffer and the second buffer in the embodiments above, are provided in the hardware, and the PSS correlation result is written into the buffers in a ping-pong manner. Each time a buffer is fully written, the hardware is responsible for writing the PSS correlation result of the buffer into a correlation value buffer area of the L2D.

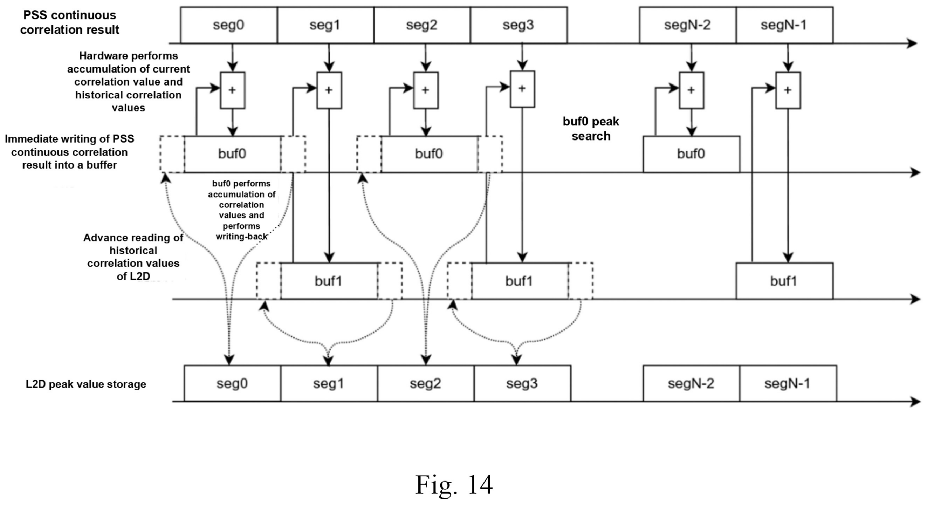

Fig. 14 is a schematic principle diagram of non-initial data writing of external storage according to embodiments of the present invention. As shown in Fig. 14, if it is not the initial PSS peak search, it is necessary to consider accumulation of PSS correlation historical data and current data, peak search and writing into the L2D. The PSS correlation is implemented in the hardware, and two temporary buffers (i.e. buf0 and buf1 in Fig. 14) are provided in the hardware. Before the correlation values are written into buf0, first, historical PSS correlation values in the L2D are read into buffer0 through hardware scheduling, and then when the current segment is processed, the correlation values in the current segment and the historical data in buf0 are accumulated and written back into buf0. Each time buf0 is fully written, the hardware is responsible for writing the PSS correlation result of the buf0 into a correlation value buffer area of the L2D. Similarly, before the correlation values are written into buf1, first, historical PSS correlation values in the L2D are read into buf1 through hardware scheduling, and then when the current segment is processed, the correlation values in the current segment and the historical data in buf0 are accumulated and written back into buf1. Each time buf1 is fully written, the hardware is responsible for writing the PSS correlation result of the buf1 into the correlation value buffer area of the L2D.

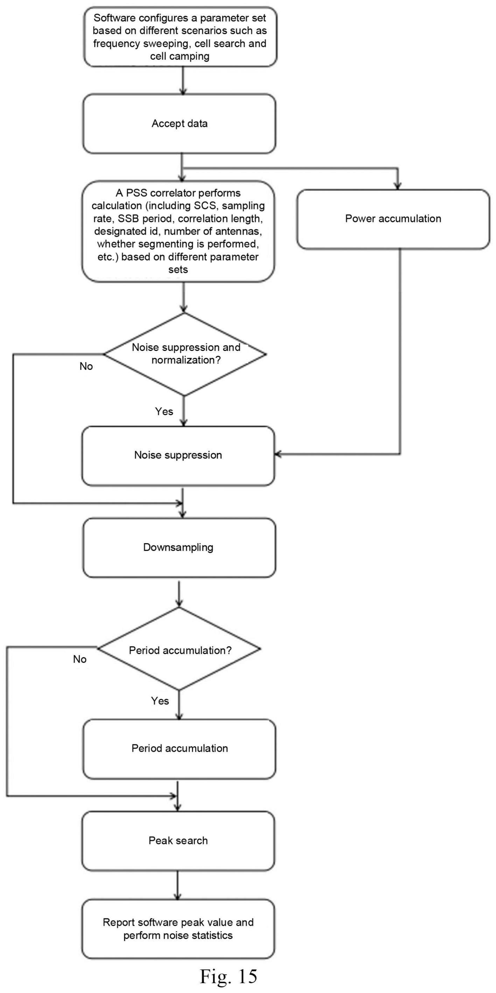

Fig. 15 is a principle flowchart of a method for detecting a PSS sequence according to embodiments of the present invention. As shown in Fig. 15, the flow is as follows:
first, software configures different parameters based on different scenarios, such as PLMN frequency sweeping, ICS cell search and intra-frequency and inter-frequency search in idle and connected states; a PSS correlator invokes different resources to calculate received data, and power accumulation calculation is also performed synchronously; and when the software configures enabling of noise elimination and normalization, a noise suppression operation is performed. After downsampling, when period accumulation is enabled, multi-period PSS correlation data is accumulated and peak search is performed, and a peak value and noise statistic are reported to the software via a software/hardware interface; and when the peak value reaches a threshold, the period accumulation can be stopped in advance. The flow is as follows:
PSS correlation processing: first, the software issues parameters based on different scenarios, and a PSS correlator performs independent matched filtering on even and odd separated data from each receive antenna. In this embodiment, time-domain data needs to be buffered into an RAM in a ping-pong manner until one piece of data is no longer used by correlation calculation, and is replaced with new data and stored at an address of the replaced data, and so on, in a cyclic storage manner. The key to filtering lies in the generation of read/write pointers. Data reading begins only when the number of sampling points reaches a filter order, and matched filtering calculation is performed between the data and three local sequences corresponding to ID2. When there is a large carrier frequency offset between a UE and a base station, in order to resist the degradation of detection performance caused by large carrier frequency offset, the matched filtering can support a segmented correlation mode, in which the filtering results of the first and last 64 points are outputted respectively, thereby reducing the length of direct correlation accumulation, which achieves improved resistance to frequency offset with minimal performance loss.

Noise elimination and normalization: the effect of a peak generated by AGC on the detection performance is eliminated, and sampling noise elimination and normalization is performed. A normalization threshold is compared with of a received signal power, and if the received signal power is greater than or equal to the threshold, normalization processing is performed, i.e. multiplying a filtering power value by a normalization factor, the factor being a ratio of a target power value to the received signal power; and when the channel quality is good, a noise elimination and normalizaztion module may be unnecessary.

Power accumulation: sliding accumulation is performed for 128 points of odd and even paths respectively before matched filtering, and the results are aligned with matched filtering data.

Downsampling: to reduce the storage amount, downsampling is performed on a normalization result, i.e. extracting from normalization results of both odd and even data paths, reserving only the maximum value.

Period accumulation: by means of multi-period accumulation smoothing, large change in a correlation result within a detection period is overcome, thereby improving the detection success rate; and data is retrieved from a read control module for merging. If merging is not needed, the merged accumulations are cleared; and if merging is needed, the read control module returns historical values at the corresponding location. Write control: correlation accumulation results of all sampling points are sequentially written into an accumulation buffer. In a software peak search mode, the storage space of each ID2 in L2D is managed using a circular buffer form; and in a hardware peak search mode, the start address and size of the storage space of each ID2 in L2D are fixed, i.e. the number of sampling points within an operation period. In addition, the present module calculates, for the software, the number of sampling points of which the correlation power is greater than the noise threshold, and a sum of power of all the sampling points. Read control: it is an inverse process of the write control, and in read control, the power of sampling points to be accumulated are prepared into an on-chip buffer, and a pre-fetching mode is used. The structure of a pre-fetching control unit is as shown in Fig. 13, and a next historical power to be accumulated is ready in advance at an interface with the accumulation module, and each time the power accumulation module uses data of one sampling point, the power of a next sampling point is prepared and outputted to the interface.

Peak search: three IDs are processed independently, and for each ID2, MaxPeakNum (the maximum number of peaks) maximum peak values are selected and sorted, and 3 × MaxPeakNum peak values are reported to the software.

Software/hardware interface: this interface configures software parameters and reports hardware detection result, including peak value reporting.

In conclusion, the embodiments of the present invention provide a method and apparatus for detecting a PSS sequence, which can solve problems such as poor configurability and reusability of hardware resources. By adding a carrier selector, flexible configuration and reuse of resources can be realized, which is beneficial to improving the capability of a receiving end for coping with complex scenarios, and providing more reliable PSS detection performance. The technical solutions of the embodiments of the present invention can be applied in scenarios involving 5G wireless communications, and the application fields include industrial field, automotive field, energy field, medical field, etc. Application scenarios in the industrial field include remote control, product state monitoring, automatic driving, ultra-high-definition video, device perception, material information collection, environment information collection, remote after-sale service, etc.; application scenarios in the automotive field include vehicle-mounted VR video calling, real-world navigation, etc.; applications in the energy field include power transmission line unmanned aerial vehicle polling, electric energy quality monitoring, workplace video monitoring, etc.; and applications in the medical field include ultra-high-definition telemedicine, emergency rescue, tele-operation and the like. Products include unmanned automobiles, mobile phones, portable routers, and the like.

The content above merely relates to preferred embodiments of the present invention, and is not intended to limit the present invention. For a person skilled in the art, embodiments of the present invention may have various modifications and changes. Any modifications, equivalent replacements, improvements, etc. made within the principle of embodiments of the present invention shall all fall within the scope of protection of embodiments of the present invention.

## Claims

1. A method for detecting a Primary Synchronization Signal, PSS, sequence, comprising:
configuring a search parameter based on a search scenario of the Primary Synchronization Signal, PSS, sequence;
performing PSS correlation calculation on resources invoked based on the search parameter; and
performing peak search based on correlation values from the PSS correlation calculation, and
selecting a corresponding PSS sequence based on a peak value, so as to complete detection of the PSS sequence.

2. The method according to claim 1, wherein the search scenario comprises one of the following:
frequency sweeping, cell search or cell camping.

3. The method according to claim 1, wherein the search parameter comprises at least one of the following:
carrier type, SubCarrier Spacing, SCS, sampling rate, Synchronization Signal Block, SSB, period, correlation length, Cell Identifier, ID, number of antennas, noise elimination and normalization, or multi-period accumulation.

4. The method according to claim 1, wherein performing PSS correlation calculation on resources invoked based on the search parameter, comprises:
performing PSS correlation calculation on storage resources and calculation resources invoked based on the search parameter.

5. The method according to claim 1, wherein the PSS correlation calculation comprises segmented correlation calculation or non-segmented correlation calculation.

6. The method according to claim 1, wherein after performing PSS correlation calculation on resources invoked based on the search parameter, the method further comprises:
comparing an antenna reception signal power with a preset normalization threshold, and in a case where the antenna reception signal power is greater than or equal to the preset normalization threshold, performing noise elimination and normalization processing on an antenna reception signal.

7. The method according to claim 1, wherein after performing PSS correlation calculation on resources invoked based on the search parameter, the method further comprises:
in a case where the search parameter comprises multi-period accumulation, accumulating a PSS correlation value at a current position and a historical PSS correlation value at the current position.

8. The method according to claim 1, wherein searching and selecting a corresponding PSS sequence based on the correlation value from the PSS correlation calculation, comprises:
calculating a noise threshold based on noise statistical data; and
selecting the corresponding PSS sequence by comparison based on the noise threshold and a peak value of the correlation value.

9. An apparatus for detecting a Primary Synchronization Signal, PSS, sequence, comprising:
a parameter configuration module, configured to configure a search parameter based on a search scenario of the Primary Synchronization Signal, PSS, sequence;
a first detection branch, comprising a correlation calculation unit and a peak search unit, wherein the correlation calculation unit is configured to perform PSS correlation calculation on resources invoked based on the search parameter; and the peak search unit is configured to perform peak search based on a correlation value from the PSS correlation calculation; and
a selection module, configured to select a corresponding PSS sequence based on a peak search result, so as to complete detection of the PSS sequence.

10. The apparatus according to claim 9, wherein there are a plurality of correlation calculation units, and each correlation calculation unit corresponds to PSS correlation calculation of data received by one antenna.

11. The apparatus according to claim 9, wherein the correlation calculation unit further comprises: a first buffer, a second buffer, and a correlation value buffer area in a level-2 cache L2D, wherein the first buffer and the second buffer are configured to store input values of PSS correlation calculation written in a ping-pong manner, and the correlation value buffer area is configured to store a historical correlation value outputted by the correlation calculation unit.

12. The apparatus according to claim 9, wherein the correlation calculation unit further comprises: a first random access memory, a second random access memory, a first read-only memory and a second read-only memory, wherein the first random access memory and the second random access memory are used for buffering time-domain data in a ping-pong manner, and the first read-only memory and the second read-only memory are used for buffering odd and even two local PSS sequences, respectively.

13. The apparatus according to claim 9, wherein the first detection branch further comprises:
a software/hardware interface unit, configured to send the configured search parameter to the first detection branch, and report the peak search result to the selection module.

14. The apparatus according to claim 13, wherein the software/hardware interface unit uses two-level storage to store search parameters for PSS sequence detection of the current period and a next period respectively, so as to support advance issuing of the search parameters.

15. The apparatus according to claim 9, wherein the first detection branch further comprises:
a period accumulation unit, configured to accumulate, in a case where the search parameter comprises multi-period accumulation, a PSS correlation value at a current position and a historical PSS correlation value at the current position.

16. The apparatus according to claim 9, wherein the first detection branch further comprises:
a noise suppression unit, configured to compare an antenna reception signal power with a preset normalization threshold, and perform noise elimination and normalization processing on an antenna reception signal in a case where the antenna reception signal power is greater than or equal to the preset normalization threshold.

17. The apparatus according to claim 9, wherein the first detection branch further comprises one or more registers for storing the search parameter, wherein the search parameter comprises at least one of the following: carrier type, SubCarrier Spacing, SCS, sampling rate, Synchronization Signal Block, SSB, period, correlation length, Cell Identifier, ID, number of antennas, noise elimination and normalization, or multi-period accumulation.

18. The apparatus according to claim 9, wherein the apparatus further comprises:
a second detection branch, wherein the second detection branch has a structure same as that of the first detection branch, and the second detection branch and the first detection branch constitute a PSS sequence detection branch with two carriers in parallel.

19. The apparatus according to claim 9, wherein the apparatus further comprises: an external memory and an external memory read/write control circuit.

20. The apparatus according to claim 9, wherein the apparatus further comprises:
a sampling rate counter, configured to adapt to different SubCarrier Spacings, SCSs, and sampling rate data.
